# EUROPÄISCHE PATENTSCHRIFT

(11) **EP 0 762 041 B1**
(45) Veröffentlichungstag und Bekanntmachung des Hinweises auf die Patenterteilung: **30.06.1999**
(21) Anmeldenummer: 96113169.5
(22) Anmeldetag: 16.08.1996
(51) Int. Cl.: F16L 58/10, F24D 3/14

(54) **Verwendung eines kunststoffummantelten Kupferrohrs**
Use of a plastic coated copper pipe
Utilisation d'un tube en cuivre avec revêtement plastique

(30) Priorität: 08.09.1995 DE 19533236
(43) Veröffentlichungstag der Anmeldung: 12.03.1997
(73) Patentinhaber: KM Europa Metal Aktiengesellschaft, D-49023 Osnabrück (DE)
(72) Erfinder: Melcher, Walter, 49545 Tecklenburg (DE)

(56) Entgegenhaltungen:
- EP-A- 0 364 717
- EP-A- 0 732 533
- DE-A- 2 755 323
- DE-A- 2 905 011
- DE-A- 3 409 013
- DE-A- 3 514 191
- US-A- 4 345 363
- US-A- 4 464 502
- PATENT ABSTRACTS OF JAPAN vol. 10, no. 85 (C-336), 4.April 1986 & JP 60 219249 A (FUJIKURA DENSEN KK)
- PATENT ABSTRACTS OF JAPAN vol. 7, no. 118 (C-167), 21.Mai 1983 & JP 58 037039 A (DAINICHI NIPPON DENSEN)

## Beschreibung

Die Erfindung befaßt sich mit einem kunststoffummantelten Kupferrohr für den Einsatz als mediumführendes Leitungsrohr in Fußboden- und/oder Wandheizungsanlagen.

Kunststoffummantelte Leitungsrohre mit metallischem Kernrohr werden vorwiegend in der Sanitär- und Heiztechnik eingesetzt. Bei einem bekannten Leitungsrohr dieser Art (DE 27 35 957 C2) wird unmittelbar auf ein Kupferrohr ein Kunststoffmantel aufextrudiert. Dieser Kunststoffmantel weist in Längsrichtung des Kupferrohrs verlaufende, nach innen ragende und sich auf der Rohroberfläche abstützende Rippen auf, die sich in Richtung auf das Kupferrohr hin verjüngen. Die innere Berippung des Kunststoffmantels hat dabei insbesondere den Vorteil, daß durch die Rippen ein Luftraum entsteht, der den Wärmewiderstand des Kunststoffmantels erhöht.

Der Kunststoffmantel dient bei der Verlegung des Leitungsrohrs im Estrich oder unter Putz vor allem als Schutz des Kupferrohrs vor äußerer Korrosion und mechanischer Belastung bzw. als Wärmeisolationsschicht zur Verminderung der Wärmeverluste. Ferner vermag der Mantel in bestimmten Grenzen die temperaturbedingte Längenausdehnung des metallischen Kernrohrs aufzunehmen, ohne daß es dabei zu einer Kraftübertragung auf die umgebenden Bauteile kommt.

Bei Verwendung eines derartigen Leitungsrohrs in Fußbodenheizungsanlagen ist es allerdings als nachteilig anzusehen, daß durch den relativ hohen Wärmewiderstand des innenberippten Kunststoffmantels die Wärmeabgabeleistung des Leitungsrohrs vermindert wird.

Ausgehend vom Stand der Technik liegt der Erfindung die Aufgabe zugrunde, ein kunststoffummanteltes Kupferrohr für den Einsatz in Fußboden- und/oder Wandheizungsanlagen bereitzustellen, das im Vergleich zu den bekannten Leitungsrohren eine höhere Wärmeleistung aufweist und mit geringerem Aufwand herstellbar ist.

Die Lösung dieser Aufgabe besteht nach der Erfindung in der Kombination der im kennzeichnenden Teil des Anspruchs 1 aufgeführten Merkmale.

Vorteilhafte Weiterbildungen der Erfindung ergeben sich aus den Unteransprüchen.

Der Einsatz eines erfindungsgemäß zu verwendenden kunststoffummantelten Kupferrohrs, beispielsweise als Leitungsrohr für ein Fußbodenheizungssystem, führt wegen der Verringerung des Wärmewiderstands des Mantels zu einer um etwa 10 % höheren Wärmeleistung nach DIN 4725, wenn die gleiche Temperatur des Heizmediums zugrundegelegt wird. Ein weiterer Vorteil liegt im niedrigen Metergewicht des Leitungsrohrs, das ein montagefreundliches Arbeiten bei niedrigen Verlegekosten erlaubt.

Als Material für den Kunststoffmantel eignet sich vorzugsweise ein Polyethylen mit einer Wärmeleitfähigkeit von etwa 0,35 W/mK. Geeignet ist aber auch eine Kunststoffmischung auf der Basis von Polyvinylchlorid, der zur Erhöhung der thermischen Beständigkeit statt einer umweltschädlichen bleihaltigen Verbindung etwa 1 bis 3 Gew.% eines Stabilisatorsystems zugesetzt wurde, das aus bleifreien Bestandteilen besteht. Je nach den Erfordernissen kann es entsprechend den Merkmalen des Anspruchs 4 vorteilhaft sein, als Stabilisatoranteil eine organische kalzium- und zinkhaltige Verbindung zu verwenden, die ein im Bereich von 3 : 1 bis 30 : 1 liegendes Verhältnis von Kalzium zu Zink aufweist. Bevorzugt sind beispielsweise Kalizium- und Zinkstearat. Zusätzlich kann die Kunststoffmischung noch co-stabilisierende Zusätze, wie z. B. epoxidiertes Sojabohnenöl und/oder Antimontrioxid enthalten. Um die Wärmeleitfähigkeit der Kunststoffmischung gezielt zu erhöhen, können darüber hinaus weitere Bestandteile, wie beispielsweise Aluminiumhydroxid, enthalten sein.

Zur Vermeidung von Verwechslungen mit anderen kunststoffummantelten Rohren für die Sanitärtechnik sind Markierungen auf dem Kunststoffmantel vorgesehen, die Hinweise über den Hersteller, die Rohrabmessungen und die Bezeichnung des Kunststoffmaterials des Mantels liefern. Diese Informationen sind insbesondere für den Fall wichtig, daß die Bestandteile des Verbundrohrs nach ihrer Nutzung recycelt werden sollen. Ferner können sich weitere Angaben, wie z. B. Längenmeßmarken auf dem Kunststoffmantel befinden. Zweckmäßigerweise weist das Leitungsrohr als weiteres Unterscheidungsmerkmal einen orange eingefärbten Kunststoffmantel auf.

Die ohne kompressible Luft oder Gaszwischenräume ausgestattete Rohrummantelung hat zudem den Vorteil, daß der Außendurchmesser des Mantels geringer ist. In anwendungsnahen Untersuchungen ist festgestellt worden, daß die Wanddicke des Mantels nur maximal 1,5 mm betragen muß, wobei der Bereich von 0,3 bis 1 mm besonders bevorzugt ist. Ein derartiges Leitungsrohr führt durch die niedrige Aufbauhöhe zu einer Materialersparnis von Estrich, Putz und Beton. Zudem wird die thermische Reaktionsfähigkeit des Fußboden- oder Wandheizungssystems verbessert, d. h. die gewünschte Raumtemperierung kann schneller erreicht werden und die Heizmitteltemperatur zusätzlich gesenkt werden.

Es versteht sich von selbst, daß entsprechende Verbesserungen auch bei Wand- oder Deckenkühlungssystemen erreicht werden können. Hierbei wird zur Raumkühlung durch die Leitungsrohre gekühltes Wasser oder ein anderes Medium hindurchgeleitet.

Die Erfindung wird nachfolgend anhand eines bevorzugten Ausführungsbeispiels noch näher erläutert.

Ein nahtlos gezogenes Kupferrohr von 12 mm Außendurchmesser und einer Wanddicke von 0,8 mm wird zunächst weichgeglüht. Anschließend wird auf das Kupferrohr ein Kunststoffmantel aufgebracht, beispielsweise durch Extrudieren. Der sowohl an der äußeren als auch an der inneren Oberfläche glatte Kunststoffmantel besteht aus Polyethylen (PE) und weist eine Wärmeleitfähigkeit von 0,35 W/mK auf. Die Wanddicke des Kunststoffmantels beträgt 1 mm.

Aufgrund der geringen Gesamtwanddicke kann das Leitungsrohr einfacher gebogen und kostengünstig verlegt werden. Hinzu kommt, daß die niedrige Einbauhöhe im Vergleich zu den bisher verwendeten Kupferrohren mit einem 2 mm dicken PVC-Stegmantel bei Verlegung in Estrich oder unter Putz zu einer erheblichen Ersparnis der umgebenden mineralischen Baumaterialien führt.

## Patentansprüche

1. Verwendung eines kunststoffummantelten Kupferrohrs als mediumführendes Leitungsrohr in Fußboden- und/oder Wandheizungsanlagen, **gekennzeichnet durch** die Kombination folgender Merkmale:
- Die Wanddicke des Kupferrohrs beträgt bei einem im Bereich von 10 bis 22 mm liegenden Außendurchmesser 0,5 bis 1,0 mm.
- Der Kunststoffmantel weist eine glatte äußere Oberfläche auf und befindet sich in vollflächigem Kontakt mit der Oberfläche des mediumführenden Rohrs.
- Der Kunststoffmantel besteht aus einem thermoplastischen Kunststoff mit einer Wärmeleitfähigkeit von mindestens 0,15 W/mK.
- Die Wanddicke des Kunststoffmantels beträgt maximal 1,5 mm.

2. Verwendung eines kunststoffummantelten Kupferrohrs nach Anspruch 1, **dadurch gekennzeichnet,** daß die Wanddicke des Kunststoffmantels im Bereich von 0,3 bis 1 mm liegt.

3. Verwendung eines kunststoffummantelten Kupferrohrs nach Anspruch 1 oder 2, **dadurch gekennzeichnet,** daß der Mantel aus einer auf der Basis von Polyvinylchlorid und Füllstoffen bestehenden Kunststoffmischung besteht, die 1 bis 3 Gew.% eines bleifreien Stabilisators enthält.

4. Verwendung eines kunststoffummantelten Kupferrohrs nach Anspruch 3 mit der Maßgabe, daß der Stabilisatoranteil der Kunststoffmischung aus einer organischen kalzium und zinkhaltigen Verbindung besteht, die ein im Bereich von 3 : 1 bis 30 : 1 liegendes Verhältnis von Kalzium zu Zink aufweist.

## Claims

1. Use of a plastic-sheathed copper pipe as a medium-conveying pipe in floor and/or wall heating installations, characterised by the combination of the following features:
- the wall thickness of the copper pipe is 0.5 to 1.0 mm with an outside diameter lying in the range from 10 to 22 mm;
- the plastic sheath exhibits a smooth outer surface and is in full surface contact with the surface of the pipe conveying the medium;
- the plastic sheath consists of a thermoplastic plastic with a thermal conductivity of at least 0.15 W/mK;
- the wall thickness of the plastic sheath is a maximum of 1.5 mm.

2. Use of a plastic-sheathed copper pipe according to claim 1, characterised in that the wall thickness of the plastic sheath lies in the range from 0.3 to 1 mm.

3. Use of a plastic-sheathed copper pipe according to claim 1 or 2, characterised in that the sheath consists of a plastic mixture based on polyvinyl chloride and fillers and containing 1 to 3% by weight of a lead-free stabiliser.

4. Use of a plastic-sheathed copper pipe according to claim 3, characterised in that the stabiliser element of the plastic mixture consists of an organic compound which contains calcium and zinc and exhibits a ratio of calcium to zinc lying in the range from 3 : 1 to 30 : 1.

## Revendications

1. Utilisation d'un tube en cuivre enrobé de matière plastique comme tube de canalisation conduisant un fluide dans les installations de chauffage au sol et/ou murales,
caractérisé par la combinaison des caractéristiques suivantes :
- l'épaisseur de paroi du tube de cuivre est comprise, avec un diamètre externe de 10 à 22 mm, entre 0,5 et 1,0 m,
- l'enveloppe de matière plastique présente une surface extérieure lisse et se trouve en contact sur toute sa surface avec la surface du tube conduisant le fluide,
- l'enveloppe de matière synthétique se compose d'une matière synthétique thermoplastique ayant une conductivité thermique d'au moins 0,15 W/mK,
- l'épaisseur de paroi de l'enveloppe en matière plastique s'élève au maximum à 1,5 mm.

2. Utilisation d'un tube en cuivre enrobé de matière plastique selon la revendication 1,
caractérisé en ce que
l'épaisseur de paroi de l'enveloppe de matière synthétique se situe dans un intervalle de 0,3 à 1 mm.

3. Utilisation d'un tube en cuivre enrobé de matière plastique selon la revendication 1 ou 2,
caractérisée en ce que
l'enveloppe est constituée d'un mélange de matière synthétique à base de chlorure de polyvinyle et de charges, qui contient de 1 à 3 % en poids d'un stabilisateur sans plomb.

4. Utilisation d'un tube en cuivre enrobé de matière plastique selon la revendication 3 sous réserve que la partie stabilisateur du mélange de matière plastique se compose d'un composé organique contenant du calcium et du zinc qui présente un rapport du calcium au zinc compris entre 3:1 et 30:1.
